# EUROPÄISCHE PATENTANMELDUNG

(11) **EP 2 455 135 A2**
(43) Veröffentlichungstag der Anmeldung: **23.05.2012**
(21) Anmeldenummer: 11185614.2
(22) Anmeldetag: 18.10.2011
(51) Int. Cl.: A62C 2/06, E04B 1/94

(54) **Brandschutzelement**

(30) Priorität: 19.11.2010 DE 102010044161
(71) Anmelder: HILTI Aktiengesellschaft, 9494 Schaan (LI)
(72) Erfinder: Klein, Manfred, 86916 Kaufering (DE); Drexl, Michael, 86938 Schondorf (DE)

(57) **Zusammenfassung**

Ein Brandschutzelement hat einen geschäumten Körper aus intumeszierendem Material, in den ein Trägerbauteil (18) eingebettet ist. Das Trägerbauteil (18) ist ein dünnes, flächiges Teil, welches auf wenigstens einer Flachseite vom Körper bedeckt ist.

## Beschreibung

Die Erfindung betrifft ein Brandschutzelement mit einem geschäumten Körper, der zumindest teilweise aus einem aschebildenden und ggf. intumeszierenden Stoffgemisch besteht.

Brandschutzelemente aus Schaumstoff mit intumeszierenden Additiven werden beispielsweise zur hitze- und feuerhemmenden sowie zur rauchgasdichten Abdichtung von Kabel- und/oder Rohrdurchführungen verwendet. Der Schaumstoff dient dabei als Matrix für die Brandschutzadditive. Zur Abschottung von großen Durchführungen werden insbesondere Brandschutzelemente in Quaderform eingesetzt. Die Brandschutzelemente bestehen dabei aus einer Polymer-Matrix, in die verschiedene Additive wie intumeszierende Materialien, Aschekrustebilder und Aschekrusten-Stabilisatoren eingebracht werden.

Ihre hitze- und feuerhemmenden Eigenschaften ergeben sich im Brandfall dadurch, dass das Brandschutzelement außenseitig unter Bildung einer Ascheschicht abbrennt. Diese Ascheschicht sorgt dann für die thermische Isolation. Wichtig dabei ist jedoch, dass die Ascheschicht möglichst stabil ist, sodass sie nicht vom Rest des Brandschutzelements abfällt. Dies wird beispielsweise durch chemische Zusätze im Schaumstoff erreicht. Bei großen Brandschutzelementen bzw. bei großen zu verschließenden Durchführungen muss natürlich auch bei fortgeschrittenem Brandverlauf noch zum einen genügend mechanische Stabilität der Aschekruste selbst als auch eine genügend stabile Haftung der Aschekruste an dem noch unverbrannten Teil des Brandschutzelements erhalten bleiben.

Bei größeren Brandschutzelementen, wie beispielsweise Brandschutzsteinen wird häufig beobachtet, dass bei fortgeschrittenem Abbrand des Brandschutzsteins die bereits gebildete Asche abfällt oder der noch nicht verbrannte Teil des Brandschutzsteins aus dem Schott herausfällt. Dies ist zum einen darauf zurückzuführen, dass sich die Matrix im Falle eines Brandes zu schmelzen beginnt wodurch erst die Intumeszenz der Additive stattfinden kann. Allerdings schwächt die Zone der flüssigen Matrix den Verbund mit der bereits gebildeten Aschekruste. Darüber hinaus kann die Intumeszenz dazu beitragen, dass der noch unverbrannte Teil des Brandschutzsteins aus der Abschottung hinaus geschoben wird. Insbesondere bei großen Deckenschotts kann dies problematisch werden.

Die Schwächung des Verbundes zwischen der Aschekruste und dem noch unverbrannten Teil des Brandschutzsteins kann bei dem in den USA vorgeschriebenen Hose-Stream-Test, bei dem nach dem Brand die Aschekruste einem starken Wasserstrahl standhalten muss, zum Problem werden.

Folglich wurden Versuche unternommen, den Verbund zwischen der Aschekruste und dem unverbrannten Teil des Brandschutzelements zu stärken. Zu diesem Zweck ist es bekannt, außenseitig ein Drahtgeflecht auf das Brandschutzelement aufzubringen oder das Brandschutzelement an ein Drahtgeflecht anzusetzen, welches ein Abfallen der Ascheschicht verhindert. Dies ist insbesondere bei sogenannten Deckenschotts besonders wichtig, damit sich die Asche nicht vom Untergrund löst und in dicken Schichten vom Schott abfällt. Dann würde nämlich die darunter liegende Schicht verbrannt werden, was die mechanische Festigkeit des Brandschutzelements sowie ihre Widerstandsdauer gegen Durchbrennen verkürzen würde. Auch Querstreben, Zwischenlagen aus Glasfasergewebe oder dergleichen, die das Brandschutzelement nach unten abschließen, sind bekannt.

Aufgabe der Erfindung ist es, ein Brandschutzelement so zu verbessern, dass die im Brandfall entstandene Aschenkruste möglichst stabil am Brandschutzelement gehalten wird.

Das erfindungsgemäße Brandschutzelement der eingangs genannten Art weist dabei wenigstens ein Trägerbauteil, das als dünnes, flächiges Teil ausgebildet ist, auf. Insbesondere ist das Trägerbauteil ein in den Körper eingebettetes, vorgefertigtes Trägerbauteil, welches auf einer seiner beiden Flachseiten vom Körper bedeckt ist, vorzugsweise vollständig bedeckt ist.

Das Brandschutzelement ist nicht auf eine bestimmte Form festgelegt. Erfindungsgemäß kann das Bauteil jegliche erdenkliche Form annehmen, die dem Abschotten von Durchführungen zum Zwecke des Brandschutzes dienen. Formen die hierfür in Frage kommen, sind Steine in Form von Ziegelsteinen, Matten, Stopfen zum Verschließen von runden Öffnungen, Wanddurchführungen für einzelne Kabel (Tüllen), um nur einige beispielhaft zu nennen.

In einer Ausführungsform der Erfindung wird das Trägerbauteil nachträglich an dem Brandschutzelement befestigt. Es kann in einer dem Fachmann bekannten Weise auf das Brandschutzelement geklebt werden, so dass das Trägerbauteil auf einer Seite vom Körper des Brandschutzelements bedeckt ist.

In einer bevorzugten Ausführungsform sieht das erfindungsgemäße Brandschutzelement keine nachträglich außenseitig angebrachten Trägerbauteile bzw. Hilfsmittel wie Drahtgeflechte, Streben oder Glasfasergewebe vor. Die Stabilität der Aschekruste wird vielmehr durch ein in den Körper eingebettetes, vorzugsweise vollständig eingebettetes Trägerbauteil erreicht. Diese Ausführungsform bezieht sich auf ein Brandschutzelement mit einem geschäumten Körper, der zumindest teilweise aus einem aschebildenden und gegebenenfalls intumeszierenden Stoffgemisch besteht, und wenigstens einem in dem Körper eingebetteten, vorgefertigten Trägerbauteil, wobei das Trägerbauteil ein dünnes, flächiges Teil ist, welches auf wenigstens einer Flachseite, bevorzugt auf drei Seiten, besonders bevorzugt vollständig vom Körper bedeckt ist.

Dieses Trägerbauteil ist kein dickes, voluminöses Bauteil, sondern ein flächiges Teil, dessen Dicke vorzugsweise maximal 2 mm beträgt. Diese Dicke wird senkrecht zur Haupterstreckungsrichtung des Teils gemessen. Insofern unterscheidet sich dieses Trägerbauteil auch vom wabenförmigen Bauteil, welches in der DE 10 2005 013 724 B4 vorgesehen ist. Das erfindungsgemäße Brandschutzelement ist im Vergleich hierzu sehr leicht herzustellen, insbesondere ist aufgrund der dünnen, flächigen Geometrie des Trägerbauteils ein Ausbilden von größeren Blasen im Körper durch zahlreiche zu befüllende, voneinander abgeschottete Kammern ausgeschlossen.

Das flächige Teil kann auch durch aneinanderlegen von Fasern oder faserförmigen Elementen welche nicht miteinander verbunden sind, gebildet werden. Hierbei ist wichtig, dass die Fäden in Richtung des Abbrennens des Bauteils in dieses integriert werden, da ansonsten die erfindungsgemäße Wirkung nicht erreicht wird.

Damit das Trägerbauteil im Brandfall eine möglichst gute Verbindung zwischen der bereits gebildeten (intumeszierten) Aschekruste und dem noch unverbrannten Teil des Brandschutzelements aufweist, sollte es wenigstens von drei Seiten, bevorzugt allseitig vom Körper bedeckt sein. Dies bedeutet, dass das Trägerbauteil eine Außenseite des Brandschutzelements bilden kann. Bevorzugt erstreckt sich das Trägerbauteil nicht bis zur Außenseite des Körpers.

Das Trägerbauteil kann insbesondere ein flexibles Teil sein, welches vorzugsweise sogar nicht biegesteif ausgeführt ist, sondern dem Brandschutzelement erst dann Stabilität verleiht, wenn es in den Körper beim Schäumen eingebettet ist.

Das Trägerbauteil soll eine Struktur aufweisen, welche eine Verbindung zwischen der Aschekruste und dem noch unverbrannten Teil des Bauteils über die Schmelzzone hinweg sicherstellt. Wie oben bereits erwähnt kann dies durch nebeneinander angeordnete Fasern oder Fäden, wie etwa einem Gelege, erreicht werden. Gemäß der bevorzugten Ausführungsform hat das Trägerbauteil eine Gitterstruktur durch die sich der Schaum hindurch erstreckt.

Vorzugsweise wird als Trägerbauteil ein Gewebe verwendet.

Wichtig beim erfindungsgemäßen Brandschutzelement ist auch, dass gemäß einer Ausführungsform das Trägerbauteil eine Maschenweite aufweist sowie die Fäden des Gewebes eine Fadenstärke besitzen, welche zueinander in einem bestimmten Verhältnis stehen. Die Fadenstärke bezieht sich hierbei nicht auf die Stärke eines einzelnen Fadens sondern auf die Dicke des Gewebes. Das Verhältnis der Maschenweite zur Fadenstärke sollte im Bereich von 1 bis 200 liegen, insbesondere im Bereich von 12 bis 18.

Die Fäden des Gewebes können eine Fadenstärke zwischen 0,05 und 1 mm besitzen, bevorzugt zwischen 0,1 und 0,8 mm und stärker bevorzugt 0,2 mm, und/oder das Gewebe eine Maschenweite von 1 bis 50 mm haben, bevorzugt 2 bis 20 mm und stärker bevorzugt 3 bis 5 mm.

Gemäß der bevorzugten Ausführungsform ist das Trägerbauteil aus einem temperaturbeständigen Material, insbesondere einem anorganischen Material. Temperaturbeständig im Sinne der Erfindung bedeutet, dass die Materialien einen höheren Schmelzpunkt als das Matrixmaterial aufweisen. Solche Materialien können Kohlenstoff, Keramik, Basalt, mineralische Fasern, Glasfasern, natürliche Fasern und Verbundwerkstoffe mit Kunststoff sein. Auch Lochbleche, Streckmetalle, Gewebe aus Metallen, wie Aluminium, die derart geschaffen sind, dass sie die flexiblen Eigenschaften des Brandschutzelements nicht beeinträchtigen, können als Trägerbauteil erfindungsgemäß verwendet werden.

Bevorzugt werden solche Materialien als Trägerbauteil verwendet, die eine einfache Verarbeitung, wie etwa das Zuschneiden des Brandschutzelements mit einem Teppichmesser, zulassen.

Feuerfeste Trägerbauteile sind zwar bevorzugt, jedoch können je nach Dicke der Schicht zwischen Außenseite des Brandschutzelements und Trägerbauteil auch brennbare Materialien für das Trägerbauteil verwendet werden. Hierbei muss nur sichergestellt sein, dass die im Brandfall entstehende Ascheschicht dick genug ausgeführt wird.

Zur Verdeutlichung wird die Erfindung anhand eines Brandschutzsteines genauer beschreiben, ohne diese auf einen Brandschutzstein einzuschränken.

Die Anordnung des Bauteils in dem Brandschutzelement ist nicht beschränkt, solange das Trägerbauteil in Richtung des Abbrennens des Brandschutzelements eingebaut wird. In einer Ausführungsform der Erfindung kann das Trägerbauteil möglichst nahe an der Außenseite des Brandschutzelements angeordnet sein. Insbesondere kann es sich dabei entlang wenigstens einer Außenseite des Körpers erstrecken. Bei einem Brandschutzelement in Form eines Quaders beispielsweise, der so in eine Durchführung eingebaut wird, dass sich dessen längere Seite in die Durchführung hinein erstreckt, so dass das Abbrennen von der kleineren Seitenfläche des Quaders her erfolgt, sollte das Trägerbauteil sich wenigstens entlang der Grundfläche des Quaders erstrecken.

Eine mögliche Ausführungsform hierbei sieht vor, dass sich das Trägerbauteil entlang einer, vorzugsweise mehreren Außenseiten des Körpers komplett entlang erstreckt.

Alternativ oder zusätzlich hierzu kann auch ein gebogen oder geknickt im Körper eingebettetes Trägerbauteil vorgesehen sein. Beispielsweise kann das Trägerbauteil wellenförmig verlaufen oder V-förmig geknickt. Darüber hinaus lassen sich auch überlappende oder überschneidende Trägerbauteile einsetzen.

Wie bereits erläutert, ist das Brandschutzelement gemäß einer bevorzugten Ausführungsform quaderförmig.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Perspektivansicht eines bei einem erfindungsgemäßen Brandschutzelement verwendeten Trägerbauteils zusammen mit einer Form zum Herstellen des erfindungsgemäßen Brandschutzelements sowie das damit hergestellte erfindungsgemäße Brandschutzelement,
- Figuren 2 bis 4 verschiedene Ausführungsformen von Trägerbauteilen, die in das erfindungsgemäße Brandschutzelement eingebettet werden.

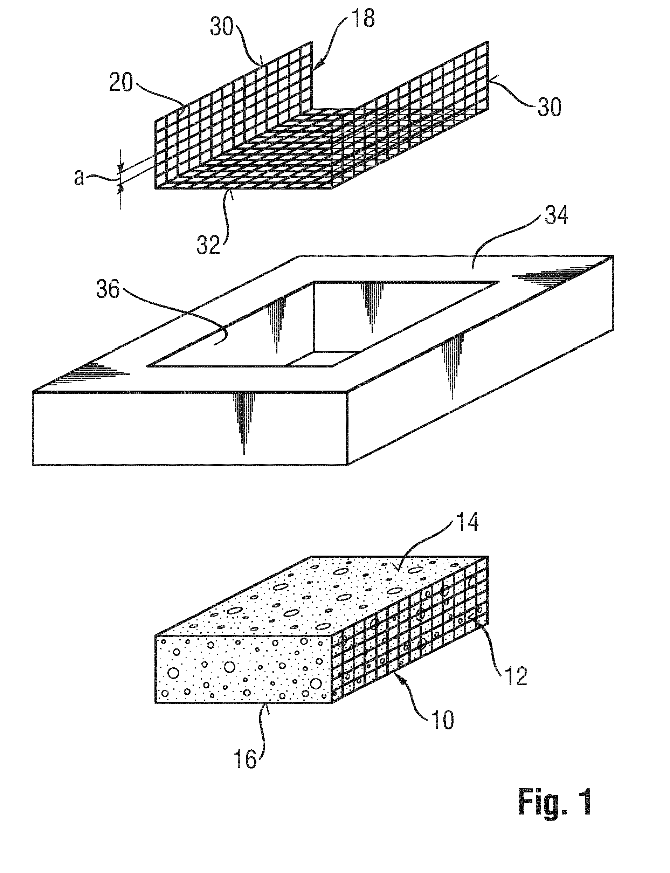

In Figur 1 ist ein Brandschutzelement 10 gezeigt, welches beispielsweise in Deckenöffnungen zur Abdichtung von Kabel- und/oder Rohrdurchführungen eingesetzt wird.

Das Brandschutzelement 10 ist ein quaderförmiger Körper mit mehreren Außenseiten, genauer gesagt Seitenflächen 12 sowie einer Ober- und einer Unterseite 14 bzw. 16.

Das Brandschutzelement 10 besteht zum Teil aus einem aschebildenden und ggf. intumeszierenden Stoffgemisch, welches einem schäumenden Stoff beigemengt wird. Dieses Stoffgemisch zusammen mit dem aufschäumenden Stoff, vorzugsweise Polyurethan, erzeugt nach dem Schäumen und Aushärten einen geschäumten Körper. In diesen geschäumten Körper ist ein oder sind mehrere sogenannte Trägerbauteile 18 eingebettet. In Figur 1 ist ein Trägerbauteil 18 dargestellt, welches eine U-Form hat.

Als Trägerbauteil wird ein sehr dünnes, vorzugsweise flächiges, vorgefertigtes Bauteil eingesetzt. Bevorzugt wird ein handelsübliches Armierungsgewebe aus Textilglas verwendet.

Gemäß der bevorzugten Ausführungsform ist das Trägerbauteil flexibel, insbesondere nicht eigensteif ausgeführt.

Ein Beispiel für ein solches Trägerbauteil ist ein Gewebe, mit mehreren Fäden 20, die eine Dicke zwischen 0,1 und 1 mm, vorzugsweise 0,2 bis 0,3 mm haben.

Das Trägerbauteil 18 weist zahlreiche Öffnungen auf, deren Größe über eine sogenannte Maschenweite definiert ist. Die Maschenweite beträgt zwischen 1 und 50 mm, vorzugsweise 3,5 bis 4,5 mm. Als Maschenweite wird der kleinste Abstand zwischen benachbarten Gitterelementen (bei Gewebe: Fäden) definiert. In Figur 1 wird die Maschenweite mit a bezeichnet.

Die Maschenweite a steht im Verhältnis zur Fadenstärke, und zwar beträgt ihr Verhältnis 1 bis 200, insbesondere 10 bis 50 und besonders bevorzugt 12 bis 18.

Als Material für das Trägerbauteil werden anorganische und/oder organische Materialien oder auch brennbare Materialien verwendet. Bevorzugt sind Materialien wie Kohlenstoff, Keramik, Basalt, mineralische Fasern, Glasfasern, natürliche Fasern und Verbundstoffe mit Kunststoff im Einsatz sowie reine Kunststoffe, die einen höheren Schmelzpunkt als das Matrixmaterial haben.

Das Trägerbauteil 18 ist so dünn und flexibel, dass es mit einem Messer, insbesondere einer Art Teppichmesser oder mit einer Schere geschnitten werden kann. Idealerweise wird das Trägerbauteil aus einem Glasfasermaterial hergestellt, wobei aber auch Metall verwendet werden kann.

Die Herstellung des Brandschutzelements wird im Folgenden erläutert.

Das Trägerbauteil 18 wird geschnitten und anschließend gebogen, im folgenden Fall U-förmig gebogen.

Bei der gezeigten Ausführungsform sind zwei Seiten 30 sowie eine Grundfläche 32 vorgesehen, die zwei Seitenflächen 12 sowie der Unterseite 16 zugeordnet sind.

Das Trägerbauteil 18 wird in ein Formteil 34 eingelegt, welches einen umlaufenden Rahmen sowie einen Boden besitzt. Die Größe des Trägerbauteils 18 ist so gewählt, dass die Flächen 30 und 32 etwas kleiner als die zugeordneten Flächen in der Ausnehmung des Formteils sind. Nach dem Hineinlegen des Trägerbauteils 18 in die Ausnehmung 36 im Formteil 34 wird das Trägerbauteil 18 so positioniert, dass es allseitig einen geringen Abstand von dem Formteil 34 besitzt.

In die Ausnehmung 36 wird anschließend ein fließfähiges Stoffgemisch eingegossen, wobei eventuell auch zuvor, vor dem Einlegen des Trägerbauteils 18, ein Teil dieser Masse im Bereich des Bodens des Formteils 34 eingebracht werden könnte. Anschließend wird das Formteil oberseitig durch einen Deckel (nicht gezeigt) geschlossen. Die eingebrachte Masse ist beispielsweise Polyurethan mit einem aschebildenden und intumeszierenden Gemisch. Die Masse schäumt aus und durchdringt das Trägerbauteil 18 aufgrund der zahlreichen Öffnungen. Nach dem Aushärten ist das Trägerbauteil 18 bevorzugt vollständig innerhalb des gebildeten, geschäumten Körpers. Zur Vereinfachung der Fertigung des Brandschutzelements 10 kann auch die Fläche 32 eine Grundfläche des Brandschutzelements 10 bilden. Das Trägerbauteil 18 bildet zusammen mit dem geschäumten Körper das Brandschutzelement 10. Aufgrund der Gitterstruktur hält im Brandfall die Aschekruste sehr stabil am Rest des Brandschutzelements. Zudem wird dem gesamten Brandschutzelement 10 eine höhere mechanische Festigkeit verliehen.

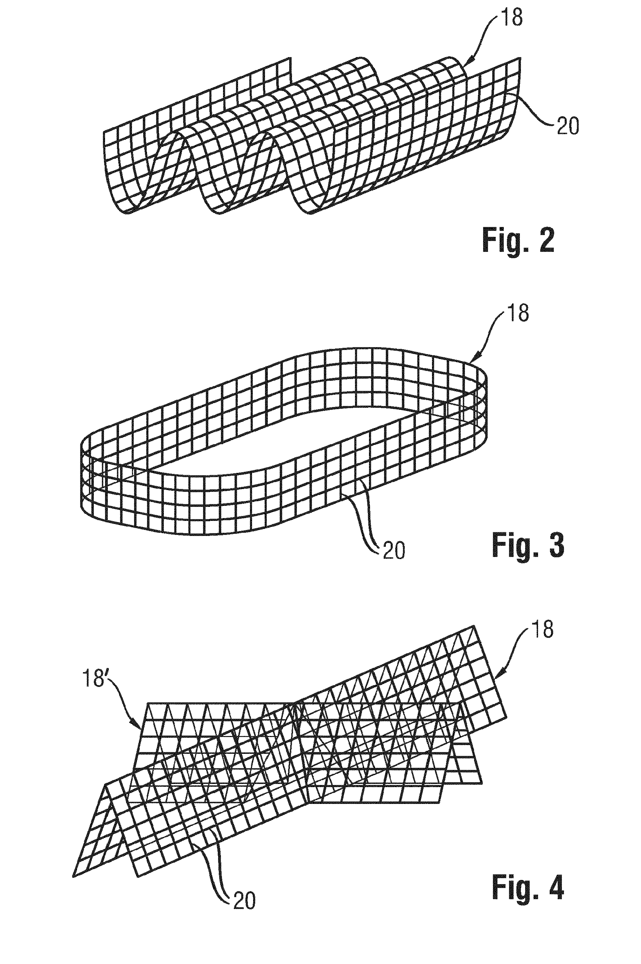

In Figur 2 zeigt eine andere Ausführungsform des Trägerbauteils 18, welches hier wellenförmig ausgeführt ist und in dieser Wellenform in dem geschäumten Körper vollständig untergebracht ist. Über die Wellenform, die quer oder längs in dem geschäumten Körper untergebracht sein kann, ergibt sich eine sehr stabile Halterung des Trägerbauteils im Körper, der auch der Halterung der Aschekruste zugute kommt. Sollte nämlich die Aschekruste partiell wegfallen, sodass das Trägerbauteil freiliegt oder zu stark wärmebelastet wird, so wird nicht schlagartig das gesamte Trägerbauteil abfallen oder verbrannt werden, sondern nur ein Teil. Der übrige Teil steht weiterhin über die sich dann neu bildende Kruste als Halterung zur Verfügung.

Bei Figur 3 wird ein ringförmiges Trägerbauteil 18 eingesetzt, welches nahe an den Außenseiten 12 verläuft. Hier ist kein Trägerbauteil im Bereich der Ober-oder Unterseite 14 bzw. 16 vorgesehen. Die Fäden auch dieser Gitterstruktur können unterschiedlich ausgerichtet sein, sie müssen sich nicht parallel zur Haupterstreckungsrichtung (Kreisrichtung) erstrecken. Dies gilt im Übrigen auch für die Ausführungsform nach Figur 2, bei der ebenfalls eine Gitterstruktur, vorzugsweise auch ebenfalls ein Gewebe, vorgesehen sein sollte. Im Übrigen gilt für alle Ausführungsformen, dass die zuvor im Zusammenhang mit Figur 1 erwähnten Eigenschaften des Trägerbauteils auch hier vorhanden sein können.

Bei der Ausführungsform nach Figur 4 sind mehrere Trägerbauteile 18, 18' vorgesehen, und zwar in Form von V-förmig geknickt oder gebogen verlaufenden Trägerbauteilen, die zum Teil geschlitzt sind, damit sie ineinander gesteckt werden können. Es ergibt sich eine Art Kreuzstruktur. Auch hier, wie bei den übrigen Ausführungsformen, wird das Trägerbauteil 18, 18' vollständig in dem geschäumten Körper untergebracht.

Obwohl zuvor von nicht biegesteifen Trägerbauteilen gesprochen wurde, können natürlich auch biegesteife Trägerbauteile eingesetzt werden, was ihre Positionierung beim Einbringen der fließenden Masse und beim anschließenden Schäumen verbessert.

Ein Beispiel für eine solche biegesteife Ausführung wäre es, das Trägerbauteil mit einer zusätzlichen Struktur oder einem zusätzlichen stützenden Stoff zu versehen, beispielsweise indem das zuvor flexible Trägerbauteil in Form gebracht und dann über Metallhalterungen oder Kunststoffummantelungen in bleibende Form gebracht wird.

Im Brandfall wirkt das Trägerbauteil zum einen als Armierung, indem es einerseits die Ascheschicht stabiler macht, d.h. dass der Verbund zwischen der Ascheschicht und dem unverbrannten Teil des Brandschutzelements gestärkt wird, sodass das Brandschutzelement einer Belastung, wie zum Beispiel im sogenannten Hose-Stream-Test (nach ASTM-Teststandard) standhält. Zum anderen bewirkt das Trägerbauteil, dass die Intumeszenz nicht uneingeschränkt und ungerichtet erfolgt, sondern über die verminderte Intumeszenz eine Verdichtung und damit eine höhere Stabilität der Ascheschicht erreicht wird. Darüber hinaus verhindert das Trägerbauteil bei Verwendung des Brandschutzelements als Deckenschott ein Herabfallen der Ascheschicht, wodurch das Brandelement länger stabil bleibt.

Zusätzliche Hilfsmittel zur äußeren Halterung des Brandschutzelements sind nicht vorgesehen. Damit werden die Herstellung und der Einbau des Brandschutzelements vereinfacht.

Vorzugsweise sind außenseitig am Brandschutzelement keine weiteren Deckschichten oder dergleichen aufgeklebt.

Die Flachseiten des dünnen, flächigen Trägerbauteils 18 sind die Seiten der größten Oberflächen, bezüglich Figur 1 für den Abschnitt 32 die Ober- und Unterseite, bezüglich der Abschnitte 30 die Innen- und die Außenseite.

## Patentansprüche

1. Brandschutzelement mit einem geschäumten Körper, der zumindest teilweise aus einem aschebildenden und gegebenenfalls intumeszierenden Stoffgemisch besteht, und wenigstens einem vorgefertigten Trägerbauteil (18, 18'), wobei das Trägerbauteil (18, 18') ein dünnes, flächiges Teil ist, welches mit wenigstens einer Flachseite mit dem Körper verbunden ist.

2. Brandschutzelement nach Anspruch 1, **dadurch gekennzeichnet, dass** das Trägerbauteil (18, 18') in den Körper eingebettet ist, wobei das Trägerbauteil (18, 18') auf wenigstens einer Flachseite vom Körper bedeckt ist, vorzugsweise vollständig bedeckt ist.

3. Brandschutzelement nach Anspruch 1 oder 2, **dadurch gekennzeichnet, dass** das Trägerbauteil (18, 18') ein flexibles Teil ist, das vorzugsweise nicht biegesteif ausgeführt ist.

4. Brandschutzelement nach einem der vorhergehenden Ansprüche, **dadurch gekennzeichnet, dass** das Trägerbauteil (18, 18') eine Gitterstruktur hat.

5. Brandschutzelement nach einem der vorhergehenden Ansprüche, **dadurch gekennzeichnet, dass** das Trägerbauteil (18, 18') ein Gewebe oder ein Gelege ist.

6. Brandschutzelement nach Anspruch 5, **dadurch gekennzeichnet, dass** das Trägerbauteil (18, 18') eine Maschenweite (a) hat und die Fäden (28) des Gewebes eine Fadenstärke haben, wobei das Verhältnis der Maschenweite (a) zur Fadenstärke im Bereich von 1 bis 200 liegt.

7. Brandschutzelement nach Anspruch 5 oder 6, **dadurch gekennzeichnet, dass** die Fäden des Gewebes eine Fadenstärke haben, die im Bereich von 0,05 bis 1 mm liegt, und/oder dass das Gewebe eine Maschenweite (a) hat, die im Bereich zwischen 1 und 50 mm liegt.

8. Brandschutzelement nach einem der vorhergehenden Ansprüche, **dadurch gekennzeichnet, dass** das Trägerbauteil (18, 18') aus temperaturbeständigem Material, insbesondere anorganischem Material ist.

9. Brandschutzelement nach Anspruch 8, **dadurch gekennzeichnet, dass** das Trägerbauteil aus Glasfasern besteht.

10. Brandschutzelement nach einem der vorhergehenden Ansprüche, **dadurch gekennzeichnet, dass** das Trägerbauteil (18, 18') gebogen oder geknickt im Körper eingebettet ist.

11. Brandschutzelement nach Anspruch 9, **dadurch gekennzeichnet, dass** sich das Trägerbauteil (18, 18') bis nahe an die Außenoberfläche des Körpers, vorzugsweise entlang wenigstens einer Außenseite des Körpers, erstreckt.

12. Brandschutzelement nach einem der vorhergehenden Ansprüche, **dadurch gekennzeichnet, dass** das Trägerbauteil (18, 18') wellenförmig, ringförmig oder U-förmig verlaufend im Körper eingebettet ist.

13. Brandschutzelement nach einem der vorhergehenden Ansprüche, **dadurch gekennzeichnet, dass** es quaderförmig ist.

14. Brandschutzelement nach einem der vorhergehenden Ansprüche, **dadurch gekennzeichnet, dass** es zylindrisch oder kegelförmig ist.
